# EUROPÄISCHE PATENTANMELDUNG

(11) **EP 3 267 542 A1**
(43) Veröffentlichungstag der Anmeldung: **10.01.2018**
(21) Anmeldenummer: 16020262.8
(22) Anmeldetag: 06.07.2016
(51) Int. Cl.: H02G 3/22

(54) **VERFAHREN ZUM MONTIEREN EINER GEBÄUDEEINFÜHRUNG**

(71) Anmelder: Hauff-Technik GmbH & Co. KG, 89568 Hermaringen (DE)
(72) Erfinder: Scheuring, Horst, 89182 Bernstadt (DE)
(74) Vertreter: König Szynka Tilmann von Renesse Patentanwälte Partnerschaft mbB

(57) **Zusammenfassung**

Die Erfindung betrifft ein Verfahren zum Montieren einer Gebäudeeinführung (3) in einer Durchlassöffnung (2) in einer Wand (1), bei welchem Verfahren zunächst die Gebäudeeinführung (3) in die Durchlassöffnung (2) gesetzt wird und ein radial zwischen einer Laibung (5) der Durchlassöffnung (2) und einem innerhalb der Durchlassöffnung (2) angeordneten Abschnitt (3a) der Gebäudeeinführung (3) angeordnetes Füllvolumen mit einer zunächst fließfähigen und dann härtenden Füllsubstanz (4) aufgefüllt wird, wobei dann, nach einem zumindest teilweisen Aushärten der Füllsubstanz (4) ein Dichtflansch (20) derart auf einem außerhalb der Durchlassöffnung (2) angeordneten Abschnitt (3b) der Gebäudeeinführung (3) positioniert wird, dass er an einer Seitenfläche (21) der Wand (1) anliegt, wobei der Dichtflansch (20) durch Spannen einer Spanneinrichtung gegen die Seitenfläche (21) der Wand (1) gedrückt und in dieser Anordnung befestigt wird, und wobei die Spanneinrichtung nach dem Befestigen des Dichtflansches (20) wieder entfernt wird.

## Beschreibung

Die Erfindung betrifft ein Verfahren zum Montieren einer Gebäudeeinführung in einer Durchlassöffnung in einer Wand.

Vorliegend geht es um die Montage einer Gebäudeeinführung in einer bereits bestehenden Wand, typischerweise einer Gebäudeaußenwand. Die Durchlassöffnung wird bevorzugt als Bohrung eingebracht, bspw. als Kernlochbohrung ("Kern-bohrung"), was auch vergleichsweise große Durchmesser ermöglicht. Dies soll aber nur eine bevorzugte Möglichkeit illustrieren, das vorliegend offenbarte Verfahren kann im Allgemeinen selbstverständlich auch bei einer bei der Herstellung der Wand freigelassenen Durchlassöffnung Anwendung finden. Bei der Wand kann es sich bspw. um eine betonierte oder aufgemauerte Wand handeln.

Der vorliegenden Erfindung liegt das technische Problem zugrunde, ein besonders vorteilhaftes Verfahren zur Montage einer Gebäudeeinführung in einer Durchlassöffnung in einer Wand anzugeben.

Erfindungsgemäß löst diese Aufgabe ein Verfahren gemäß Anspruch 1.

Bevorzugte Ausgestaltungen finden sich in den abhängigen Ansprüchen und der gesamten Offenbarung, wobei in der Darstellung nicht immer im Einzelnen zwischen Verfahrens- bzw. Verwendungsaspekten unterschieden wird; jedenfalls implizit ist die Offenbarung hinsichtlich sämtlicher Anspruchskategorien zu lesen.

Bei der Montage wird also in einem ersten Schritt die Gebäudeeinführung in die Durchlassöffnung gesetzt und mit der fließfähigen Füllsubstanz, die dann aushärtet, darin befestigt. Die Füllsubstanz kann bspw. auf Mörtel-Basis vorgesehen sein, siehe unten im Detail. Der Erfinder hat nun einerseits festgestellt, dass die ausgehärtete Füllsubstanz für sich noch nicht zwingend zuverlässig eine gute Abdichtung schafft, es kann bspw. haftungsbedingt Kriechpfade entlang der Außenfläche der Gebäudeeinführung geben. Ein erster Ansatz ging deshalb dahin, auf die ausgehärtete Füllsubstanz ein streichfähiges Dichtmaterial ("Dichtschlemme") aufzutragen, um so insbesondere eine im Bereich der Durchlassöffnung unterbrochene/verletzte Gebäudeabdichtung wieder zu schließen. Als eine solche Gebäudeabdichtung kann bei der Herstellung der Wand großflächig ein Dichtmaterial auf z. B. Bitumen-Basis aufgebracht worden sein, das nun die Seitenfläche der Wand bildet. Im Bereich der Durchlassöffnung ist diese Wandabdichtung aufgebrochen (oder ausgespart). Der Erfinder hat nun andererseits festgestellt, dass das nachträgliche, lokale Aufstreichen des Dichtmaterials im Bereich der Gebäudeeinführung aufwendig und qualitativ stark von den Fertigkeiten des Monteurs abhängig ist.

Erfindungsgemäß wird deshalb nach dem zumindest teilweisen Aushärten der Füllsubstanz ein Dichtflansch derart auf einem außerhalb der Durchlassöffnung angeordneten Abschnitt der Gebäudeeinführung positioniert, dass dieser Dichtflansch an der Seitenfläche der Wand anliegt. Dabei ist eine Spanneinrichtung vorgesehen, mit der der Dichtflansch während der Montage gegen die Seitenfläche der Wand gedrückt wird und die dann, nach der Befestigung des Dichtflansches in dieser Anordnung, wieder entfernt wird. Wenngleich mit der Spanneinrichtung ein zusätzliches Werkzeug erforderlich ist, kann sie vorteilhafterweise das Anbringen des Dichtflansches vereinfachen und insbesondere auch "objektivieren" helfen. So kann Handhabungsfehlern zumindest vorgebeugt werden, die angesichts der möglichen Konsequenz von eintretender Feuchtigkeit bzw. eintretendem Wasser weitreichende Folgen haben könnten.

Nach seiner Befestigung dichtet der Dichtflansch die Gebäudeeinführung zur Seitenfläche der Wand hin, insbesondere zu einer Wandabdichtung hin. Es muss dann also idealerweise nicht mehr gesondert ein Dichtmaterial aufgestrichen werden. In axialer Richtung gesehen bedeckt der Dichtflansch die Füllsubstanz und damit die Durchlassöffnung radial außerhalb der Gebäudeeinführung vollständig, bevorzugt steht er nach radial außen (über den Rand der Durchlassöffnung) um mindestens 5 mm, weiter bevorzugt mindestens 10 mm bzw. 15 mm, besonders bevorzugt mindestens 20 mm, über. Obergrenzen können bspw. bei höchstens 800 mm, 500 mm bzw. 300 mm liegen. Sofern ein bezogen auf einen Umlauf um die axiale Richtung variierender Überstand vorliegt, wird hierbei ein über den Umlauf gebildeter Mittelwert betrachtet.

Im Allgemeinen könnte der Dichtflansch beim Befestigen der Gebäudeeinführung mittels der Füllsubstanz bereits auf der Gebäudeeinführung platziert, aber noch zu der Seitenfläche der Wand beabstandet sein, um dann nach dem An- bzw. Aushärten der Füllsubstanz an die Seitenfläche herangeschoben und in Anlage damit gebracht zu werden. Bevorzugt wird der Dichtflansch jedoch erst nach dem zumindest teilweisen Aushärten der Füllsubstanz auf die Gebäudeeinführung gesetzt.

Die Gebäudeeinführung kann eine durch die Wand hindurchzuführende Leitung selbst oder auch ein Hohlrohr bzw. Hohlkörper für eine solche Leitung sein, in welchem die eigentliche Leitung angeordnet ist bzw. im Allgemeinen auch erst nachträglich hindurchgefädelt wird. Die Leitung kann bevorzugt eine Gas- oder Wasserleitung sein, auch eine Fernwärmeleitung, im Allgemeinen ist aber bspw. ebenso eine Daten-/Telekommunikationsleitung bzw. eine Elektroleitung möglich. Bevorzugt bildet ein Kunststoffkörper die Außenwandfläche der Gebäudeeinführung, an welche sich die Füllsubstanz anlegt und auf welcher der Dichtflansch sitzt (bei einem Kunststoffkörper kann die beschriebene Haftungsproblematik besondere Relevanz haben). Dieser Kunststoffkörper ist als Hohlkörper ausgebildet, in dem bevorzugt die eigentliche Leitung angeordnet ist, bspw. im Falle einer Gas- oder Wasserhauseinführung ein Metallrohr, bspw. aus Edelstahl; dieses Metallrohr erstreckt sich dann in der Gebäudeeinführung von der einen Seite der Wand zur entgegengesetzten (nach der Montage). Gebäudeaußenseitig kann dann eine bspw. im Erdreich verlaufende Wasser- oder Gasleitung angeschlossen werden; gebäudeinnenseitig ist bspw. ein Wasser- oder Gashahn angeordnet, der bevorzugt bereits beim Einbau der Gebäudeeinführung daran vorgesehen ist.

Das Füllvolumen wird radial bevorzugt von der Laibung der Durchlassöffnung und der Gebäudeeinführung begrenzt, axial muss es sich nicht zwingend über die gesamte Länge der Durchlassöffnung erstrecken, was aber bevorzugt ist. Im Allgemeinen muss die Durchlassöffnung im Querschnitt nicht kreisförmig sein und bezieht sich "axial" auf zur Mittenachse der Durchlassöffnung bzw. der Leitung/Gebäudeeinführung parallele Richtungen (die Mittenachse reicht von einer Seite der Wand zur entgegengesetzten), wobei sich "radial" auf die den Abstand zu dieser Mittenachse bestimmenden, dazu senkrechten Richtungen bezieht. Bevorzugt steht die Mittenachse der Durchlassöffnung bzw. der Leitung/Gebäudeeinführung senkrecht auf der Seitenfläche der Wand und/oder hat die Durchlassöffnung bzw. die Leitung in zur Mittenachse senkrechten Schnittebenen betrachtet einen kreisförmigen Querschnitt. Im Falle der bevorzugten Kreisgeometrie ist das Zuführvolumen bevorzugt ein Ringraum (bei entsprechend mittiger Anordnung der Gebäudeeinführung).

Die Befestigung des Dichtflansches kann bspw. durch Verkleben erfolgen, wobei Klebstoff auf eine der Seitenfläche der Wand zugewandte Seite des Dichtflansches aufgetragen und letzter dann mit der Spanneinrichtung gegen die Seitenfläche der Wand gedrückt wird; nach dem Aushärten des Klebstoffs ist der Dichtflansch befestigt und wird die Spanneinrichtung entfernt. Alternativ und/oder zusätzlich ist auch ein Befestigen durch Verschrauben möglich, kann bzw. können also bspw. durch den Dichtflansch hindurch eine oder mehrere bevorzugt selbstschneidende Schrauben in die Füllsubstanz, insbesondere in Quellmörtel, eingeschraubt werden. Im Allgemeinen könnte dazu je Schraube auch zunächst eine Bohrung in die Füllsubstanz eingebracht und in diese ein Dübel eingesetzt werden (bspw. bei angedrücktem Dichtflansch durch diesen hindurch); bevorzugt wird bzw. werden die Schraube(n) direkt in die Füllsubstanz eingeschraubt.

In bevorzugter Ausgestaltung wird der Dichtflansch, wenn er von der Spanneinrichtung gegen die Seitenfläche der Wand gedrückt wird, in dieser Anordnung befestigt, indem ein Kragen des Dichtflansches radial auf die Gebäudeeinführung angedrückt wird. Bevorzugt erfolgt die Befestigung allein dadurch, wird also nicht zusätzlich geschraubt/geklebt. Der entsprechende Dichtflansch weist also einen Kragen und axial daran anschließend eine demgegenüber radial hervortretende Dichtscheibe auf (axial anschließend in Richtung zur Wand hin). Mit dem Andrücken des Kragens wird dann auch die Dichtscheibe in der Anlage an der Wand gehalten, und die Spanneinrichtung kann entfernt werden.

In bevorzugter Ausgestaltung wird der Kragen mit einem Spannband oder einer Spannschelle angedrückt. Die Spannschelle kann durch Anziehen einer Schraube radial verjüngt werden, das Spannband durch Einschnappen eines Schnellverschlusses, womit jeweils der Kragen angedrückt wird. Im Allgemeinen könnte der Kragen aber bspw. auch mit einem Kabelbinder angedrückt werden.

Bei einer bevorzugten Ausführungsform sind der Kragen und die Dichtscheibe des Dichtflansches monolithisch miteinander ausgebildet, sind sie also aus demselben durchgehenden Material vorgesehen (ohne Materialgrenze dazwischen). Bevorzugt ist ein weiches Material, bspw. mit einer Shore-Härte (D) von höchstens 60 Shore, weiter und besonders bevorzugt höchstens 50 Shore bzw. 45 Shore, wobei mögliche Untergrenzen (davon unabhängig) bspw. bei mindestens 35 Shore bzw. 40 Shore liegen. Generell kann der Dichtflansch bevorzugt aus einem synthetischen Kautschukmaterial vorgesehen sein, vorzugsweise Ethylen-Propylen-Dien-Kautschuk (EPDM).

Im Allgemeinen kann der Dichtflansch auch mit einer sich axial und radial erstreckenden Trennfuge derart geteilt ausgebildet sein, dass er aufgeklappt und in radialer Richtung auf die Gebäudeeinführung gesetzt werden kann. Die Trennfuge erstreckt sich dabei bevorzugt nur auf einer Seite der Mittenachse, der Dichtflansch hängt also insgesamt noch zusammen. Bevorzugt ist der Dichtflansch frei von einer solchen Trennfuge, ist also insbesondere die Dichtscheibe in Umlaufrichtung durchgehend (unterbrechungsfrei) ausgebildet, bevorzugt der gesamte Dichtflansch. Die Umlaufrichtung bezieht sich auf einen Umlauf um die die Mittenachse.

Bei einer bevorzugten Ausführungsform ist beim Einbringen der Füllsubstanz in das Füllvolumen an der Seitenfläche der Wand eine Füllplatte angeordnet, die das Füllvolumen axial begrenzt, jedenfalls bereichsweise. Letzteres meint, dass die Füllplatte des Füllvolumens zu besagter Seite der Wand hin nicht notwendigerweise vollständig abschließen muss, die Füllplatte kann bevorzugt mit einer Einlass-öffnung zum Einbringen der Füllsubstanz vorgesehen sein. Beim Einbringen der Füllsubstanz legt sich diese an die der Durchlassöffnung zugewandte Seite der Füllplatte an, die Füllplatte wird dann nach einem An- bzw. Aushärten der Füllsubstanz entfernt.

In bevorzugter Ausgestaltung wird die Füllplatte mit einer Spanneinrichtung an die Seitenfläche der Wand gedrückt, und zwar mit derselben Spanneinrichtung, die anschließend zum Andrücken des Dichtflansches verwendet wird. Soweit im Allgemeinen also das Vorsehen einer Spanneinrichtung zur Montage des Dichtflansches etwas nachteilig erscheinen mag, kommt dem vorliegend dann aufgrund der Mehrfachnutzung der Spanneinrichtung weniger Bedeutung bei. Beim Entfernen der Füllplatte wird die Spanneinrichtung entspannt, bevorzugt kann auch eine zeitweilige Demontage von der Gebäudeeinführung sein; anschießend wird die Spanneinrichtung zum Andrücken des Dichtflansches erneut gespannt, ggf. nach vorherigem (erneuten) Platzieren auf der Gebäudeeinführung.

Bei einer bevorzugten Ausführungsform wird die Spanneinrichtung gespannt, indem sie in ihrer Relativposition auf dem außerhalb der Durchlassöffnung angeordneten Abschnitt der Gebäudeeinführung festgelegt wird und anschließend eine Spannschraube der Spanneinrichtung angezogen wird. Mit dem Anziehen wird die Spannschraube in Richtung der Seitenfläche der Wand bewegt, was die Spannkraft aufbaut. Diese Spannkraft kann im Allgemeinen auch direkt auf den Dichtflansch (dessen Dichtscheibe) wirken, bevorzugt wird sie über bspw. einen umlaufenden Ring zuvor aufgespreizt, sodass also der Dichtflansch großflächig angedrückt wird. Bevorzugt können umlaufend mehrere solcher Spannschrauben vorgesehen sein, also mindestens zwei, bevorzugt nicht mehr als fünf, vier bzw. drei Spannschrauben.

In bevorzugter Ausgestaltung wird die Relativposition der Spanneinrichtung durch Anziehen einer Feststellschraube festgelegt, die mit dem Anziehen radial zu der Gebäudeeinführung hin bewegt wird. Die Spannschraube kann sich im Allgemeinen auch direkt an die Gebäudeeinführung anlegen, bevorzugt drückt sie eine Hülse der Spanneinrichtung gegen die Außenfläche der Gebäudeeinführung.

In anderer bevorzugter Ausgestaltung ist eine Spannmutter als Spannvorrichtung vorgesehen, die auf einem Außengewinde der Gebäudeeinführung geführt ist. Bei in die Durchlassöffnung gesetzter Gebäudeeinführung kann die Spannmutter entsprechend durch Drehen in der einen Richtung zur Seitenfläche der Wand hinbewegt werden (Spannen) und in der anderen Richtung von der Seitenfläche der Wand wegbewegt werden (Entspannen). Bevorzugt bildet ein Kunststoffteil der Gebäudeeinführung dieses Außengewinde. Die Spannmutter kann bspw. auch derart geteilt ausgeführt sein, dass sie aufgeklappt und auf das Außengewinde gesetzt werden kann. Die Spannmutter kann die beim Spannen aufgebrachte Spannkraft im Allgemeinen auch direkt auf bspw. eine Dichtscheibe des Dichtflansches aufbringen, es kann aber auch ein Teil dazwischen angeordnet sein.

Unabhängig von der Ausgestaltung der Spanneinrichtung im Einzelnen (ob mit Spannschraube oder Spannmutter) weist die Spanneinrichtung in bevorzugter Ausgestaltung einen Überbrückungsabschnitt auf, der die beim Spannen aufgebrachte Spannkraft auf die Dichtscheibe des Dichtflansches überträgt. Die Spannkraft wird bevorzugt auf einer Seite des Kragens (der Seitenfläche der Wand abgewandt) auf den Überbrückungsabschnitt aufgebracht, und der Überbrückungsabschnitt überträgt sie über den Kragen hinweg auf die Dichtscheibe.

In bevorzugter Ausgestaltung ist der Überbrückungsabschnitt als Hülse ausgebildet, die bereichsweise derart unterbrochen ist, dass der Kragen des Dichtflansches für die Befestigung zugänglich ist. Durch die Unterbrechung hindurch kann also bspw. eine Spannschelle angezogen bzw. der Schnellverschluss eines Spannbands betätigt werden.

In bevorzugter Ausgestaltung ist die Füllsubstanz, die in das Füllvolumen eingebracht wird, auf Mörtel-Basis vorgesehen. Bevorzugt kann ein Quellmörtel bzw.

Quellvergussmörtel sein. In allgemeinen Worten weist die Füllsubstanz bevorzugt Kalk und/oder Zement als Binder auf, ggf. in Mischung mit weiteren Funktionszusätzen. Bzgl. der Beschaffenheit der Wand und/oder der Durchlassöffnung wird generell ausdrücklich auch auf die Stand der Technik-Würdigung verwiesen.

Die Erfindung betrifft auch die Verwendung einer Gebäudeeinführung, eines Dichtflansches und einer Spanneinrichtung in einer vorliegend offenbarten Weise, also zur Montage der Gebäudeeinführung mit anschließendem Befestigen des Dichtflansches.

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Einbausituation nach einem ersten Schritt des erfindungsgemäßen Montageverfahrens;
- Figur 2: auf die Einbausituation gemäß Figur 1 folgend die Montage eines Dichtflansches.

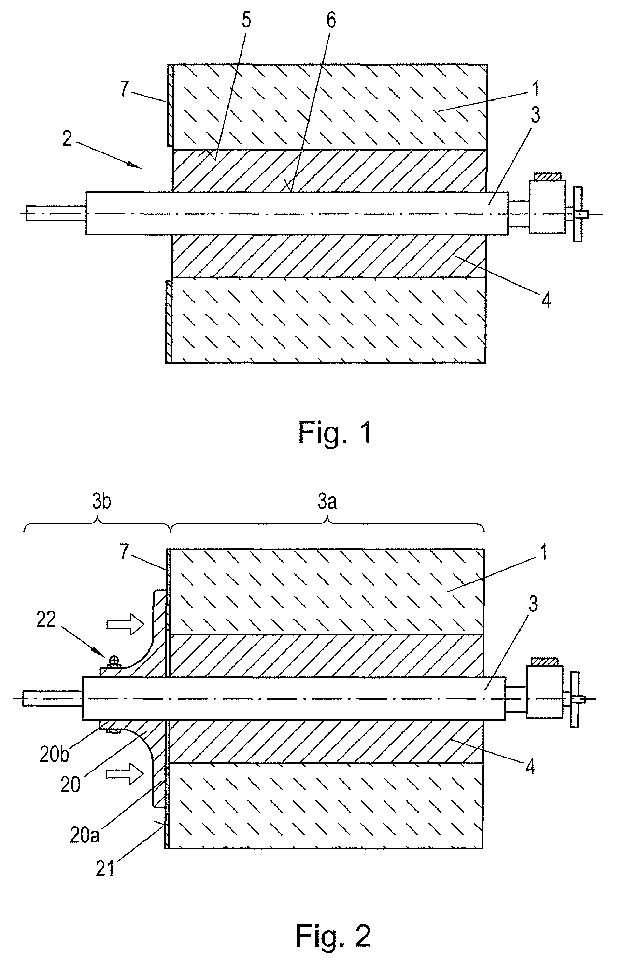

Figur 1 zeigt eine Wand 1 mit einer Durchlassöffnung 2 darin, und zwar in einem die Mittenachse der Durchlassöffnung 2 beinhaltenden Schnitt. In der Durchlassöffnung 2 wird eine Gebäudeeinführung 3 montiert, vorliegend eine Gas-Hauseinführung. Diese Montage erfolgt gegenüber der Herstellung der Wand 1 nachträglich, die Durchlassöffnung 2 ist also als Kernbohrung in die Wand 1 eingebracht.

In der in Figur 1 gezeigten Situation ist die Gebäudeeinführung 3 bereits in die Durchlassöffnung 2 gesetzt und mit einer Füllsubstanz 4, vorliegend Vergussmörtel, darin vergossen. Der Vergussmörtel füllt ein Füllvolumen, das radial von einer Laibung 5 der Durchlassöffnung 2 und einer Außenfläche 6 der Gebäudeeinführung 3 begrenzt wird, vollständig auf und hält die Gebäudeeinführung 3 so in Position.

Die Wand 1 weist an einer Seitenfläche, nämlich in Figur 1 links, eine Gebäudeabdichtung 7 auf, die im Bereich der Durchlassöffnung 2 beim Einbringen der Kernbohrung aufgebrochen wurde. Die in Figur 1 linke Seite ist die Gebäudeaußenseite, gebäudeinnenseitig weist die Gas-Hauseinführung einen Gashahn auf.

Figur 2 illustriert, wie in einem zweiten Schritt mit einem auf die Gebäudeeinführung 3 aufgeschobenem Dichtflansch 20 die verletzte Gebäudeabdichtung 7 versiegelt wird. Auf diese Weise wird bspw. Kriechpfaden vorgebeugt, die sich entlang der Außenfläche 6 der Gebäudeeinführung 3 aufgrund einer ggf. nicht optimalen Haftung des Vergussmörtels auf dem in der Durchlassöffnung 2 angeordneten Abschnitt 3a der Gebäudeeinführung 3 ausbilden könnten. Dazu wird der Dichtflansch 20 auf den außerhalb der Durchlassöffnung 2 angeordneten Abschnitt 3b der Gebäudeeinführung 3b gesetzt und mit einer Spanneinrichtung, vorliegend durch zwei Pfeile symbolisiert, gegen die Seitenfläche 21 gedrückt. Konkret wird eine radial hervortretende Dichtscheibe 20a des Dichtflansches 20 angedrückt (durch Spannen der Spanneinrichtung) und wird anschließend der Dichtflansch 20 durch Befestigen eines Kragens 20b auf der Gebäudeeinführung 3 in dieser Position festgelegt. Danach wird die Spanneinrichtung entfernt und kann sie erneut verwendet werden. Zum Andrücken des Kragens 20b ist vorliegend eine Spannschelle 22 vorgesehen.

## Patentansprüche

1. Verfahren zum Montieren einer Gebäudeeinführung (3) in einer Durchlassöffnung (2) in einer Wand (1), bei welchem Verfahren zunächst
- die Gebäudeeinführung (3) in die Durchlassöffnung (2) gesetzt wird und
- ein radial zwischen einer Laibung (5) der Durchlassöffnung (2) und einem innerhalb der Durchlassöffnung (2) angeordneten Abschnitt (3a) der Gebäudeeinführung (3) angeordnetes Füllvolumen mit einer zunächst fließfähigen und dann härtenden Füllsubstanz (4) aufgefüllt wird;
und wobei dann, nach einem zumindest teilweisen Aushärten der Füllsubstanz (4)
- ein Dichtflansch (20) derart auf einem außerhalb der Durchlassöffnung (2) angeordneten Abschnitt (3b) der Gebäudeeinführung (3) positioniert wird, dass er an einer Seitenfläche (21) der Wand (1) anliegt;
- der Dichtflansch (20) durch Spannen einer Spanneinrichtung gegen die Seitenfläche (21) der Wand (1) gedrückt und in dieser Anordnung befestigt wird;
- die Spanneinrichtung nach dem Befestigen des Dichtflansches (20) wieder entfernt wird.

2. Verfahren nach Anspruch 1, bei welchem der Dichtflansch (20) in der gegen die Seitenfläche (21) der Wand (1) gedrückten Anordnung befestigt wird, indem ein Kragen (20b) des Dichtflansches (20) radial auf die Gebäudeeinführung (3) angedrückt wird.

3. Verfahren nach Anspruch 2, bei welchem der Kragen (20b) des Dichtflansches (20) mit einem Spannband oder einer Spannschelle (22) angedrückt wird.

4. Verfahren nach Anspruch 2 oder 3, bei welchem der Kragen (20b) und eine an der Seitenfläche (21) der Wand (1) anliegende Dichtscheibe (20a) des Dichtflansches (20) monolithisch miteinander ausgebildet sind.

5. Verfahren nach einem der vorstehenden Ansprüche, bei welchem beim Auffüllen des Füllvolumens mit der Füllsubstanz (4) an der Seitenfläche (21) der Wand (1) eine das Füllvolumen zumindest bereichsweise axial begrenzende Füllplatte angeordnet ist, die vor dem Positionieren des Dichtflansches (20) entfernt wird.

6. Verfahren nach Anspruch 5, bei welchem die Füllplatte beim Auffüllen des Füllvolumens mit der Füllsubstanz (4) mit einer Spanneinrichtung an die Seitenfläche (21) der Wand (1) gedrückt wird, wobei zum Andrücken der Füllplatte und anschließend des Dichtflansches (20) dieselbe Spanneinrichtung verwendet wird.

7. Verfahren nach einem der vorstehenden Ansprüche, bei welchem die Spanneinrichtung gespannt wird, indem ihre Relativposition auf dem außerhalb der Durchlassöffnung (2) angeordneten Abschnitt (3b) der Gebäudeeinführung (3) festgelegt wird und dann eine Spannschraube angezogen wird, die mit dem Anziehen in Richtung der Seitenfläche (21) der Wand (1) bewegt wird.

8. Verfahren nach Anspruch 7, bei welchem die Relativposition der Spanneinrichtung auf dem außerhalb der Durchlassöffnung (2) angeordneten Abschnitt (3b) der Gebäudeeinführung (3) durch Anziehen einer Feststellschraube festgelegt wird, die mit dem Anziehen radial zu der Gebäudeeinführung (3) hin bewegt wird.

9. Verfahren nach einem der Ansprüche 1 bis 6, bei welchem eine Außenfläche (6) der Gebäudeeinführung (3) zumindest bereichsweise gewindeförmig ausgebildet ist und als Spannvorrichtung eine auf dem Gewinde geführte Spannmutter vorgesehen ist, die beim Spannen in Richtung der Seitenfläche (21) der Wand (1) bewegt wird.

10. Verfahren nach einem der Ansprüche 7 bis 9 in Verbindung mit einem der Ansprüche 2 bis 4, bei welchem die Spanneinrichtung einen Überbrückungsabschnitt aufweist, welcher beim Spannen der Spanneinrichtung eine Spannkraft, die auf einer der Seitenfläche (21) der Wand (1) abgewandten Seite des Kragens (20b) aufgebracht wird, auf eine im Verhältnis zu dem Kragen (20b) proximal der Seitenfläche (21) angeordnete Dichtscheibe (20a) des Dichtflansches (20) überträgt.

11. Verfahren nach Anspruch 10, bei welchem der Überbrückungsabschnitt als Hülse ausgebildet ist, die bereichsweise unterbrochen ist, womit der Kragen (20b) des Dichtflansches (20) für das Andrücken zum Befestigen des Dichtflansches (20) zugänglich ist.

12. Verfahren nach einem der vorstehenden Ansprüche, bei welchem die Füllsubstanz (4) auf Mörtel-Basis vorgesehen ist.

13. Verwendung einer Gebäudeeinführung (3), eines Dichtflansches (20)und einer Spanneinrichtung in einem Verfahren nach einem der vorstehenden Ansprüche.

## Geänderte Patentansprüche

### Geänderte Patentansprüche gemäss Regel 137(2) EPÜ.

1. Verfahren zum Montieren einer Gebäudeeinführung (3) in einer Durchlassöffnung (2) in einer Wand (1), bei welchem Verfahren
i.) die Gebäudeeinführung (3) in die Durchlassöffnung (2) gesetzt wird und
ii.) ein radial zwischen einer Laibung (5) der Durchlassöffnung (2) und einem innerhalb der Durchlassöffnung (2) angeordneten Abschnitt (3a) der Gebäudeeinführung (3) angeordnetes Füllvolumen mit einer zunächst fließfähigen und dann härtenden Füllsubstanz (4) aufgefüllt wird;
iii.) ein Dichtflansch (20) derart auf einem außerhalb der Durchlassöffnung (2) angeordneten Abschnitt (3b) der Gebäudeeinführung (3) positioniert wird, dass er an einer Seitenfläche (21) der Wand (1) anliegt;
iv.) der Dichtflansch (20) durch Spannen einer Spanneinrichtung gegen die Seitenfläche (21) der Wand (1) gedrückt und in dieser Anordnung befestigt wird;
v.) die Spanneinrichtung nach dem Befestigen des Dichtflansches (20) wieder entfernt wird;
**dadurch gekennzeichnet, dass** die Schritte iii.) bis iv.) nach den Schritten i) und ii) und einem zumindest teilweisen Aushärten der Füllsubstanz (4) vorgenommen werden.

2. Verfahren nach Anspruch 1, bei welchem der Dichtflansch (20) in der gegen die Seitenfläche (21) der Wand (1) gedrückten Anordnung befestigt wird, indem ein Kragen (20b) des Dichtflansches (20) radial auf die Gebäudeeinführung (3) angedrückt wird.

3. Verfahren nach Anspruch 2, bei welchem der Kragen (20b) des Dichtflansches (20) mit einem Spannband oder einer Spannschelle (22) angedrückt wird.

4. Verfahren nach Anspruch 2 oder 3, bei welchem der Kragen (20b) und eine an der Seitenfläche (21) der Wand (1) anliegende Dichtscheibe (20a) des Dichtflansches (20) monolithisch miteinander ausgebildet sind.

5. Verfahren nach einem der vorstehenden Ansprüche, bei welchem beim Auffüllen des Füllvolumens mit der Füllsubstanz (4) an der Seitenfläche (21) der Wand (1) eine das Füllvolumen zumindest bereichsweise axial begrenzende Füllplatte angeordnet ist, die vor dem Positionieren des Dichtflansches (20) entfernt wird.

6. Verfahren nach Anspruch 5, bei welchem die Füllplatte beim Auffüllen des Füllvolumens mit der Füllsubstanz (4) mit einer Spanneinrichtung an die Seitenfläche (21) der Wand (1) gedrückt wird, wobei zum Andrücken der Füllplatte und anschließend des Dichtflansches (20) dieselbe Spanneinrichtung verwendet wird.

7. Verfahren nach einem der vorstehenden Ansprüche, bei welchem die Spanneinrichtung gespannt wird, indem ihre Relativposition auf dem außerhalb der Durchlassöffnung (2) angeordneten Abschnitt (3b) der Gebäudeeinführung (3) festgelegt wird und dann eine Spannschraube angezogen wird, die mit dem Anziehen in Richtung der Seitenfläche (21) der Wand (1) bewegt wird.

8. Verfahren nach Anspruch 7, bei welchem die Relativposition der Spanneinrichtung auf dem außerhalb der Durchlassöffnung (2) angeordneten Abschnitt (3b) der Gebäudeeinführung (3) durch Anziehen einer Feststellschraube festgelegt wird, die mit dem Anziehen radial zu der Gebäudeeinführung (3) hin bewegt wird.

9. Verfahren nach einem der Ansprüche 1 bis 6, bei welchem eine Außenfläche (6) der Gebäudeeinführung (3) zumindest bereichsweise gewindeförmig ausgebildet ist und als Spannvorrichtung eine auf dem Gewinde geführte Spannmutter vorgesehen ist, die beim Spannen in Richtung der Seitenfläche (21) der Wand (1) bewegt wird.

10. Verfahren nach einem der Ansprüche 7 bis 9 in Verbindung mit einem der Ansprüche 2 bis 4, bei welchem die Spanneinrichtung einen Überbrückungsabschnitt aufweist, welcher beim Spannen der Spanneinrichtung eine Spannkraft, die auf einer der Seitenfläche (21) der Wand (1) abgewandten Seite des Kragens (20b) aufgebracht wird, auf eine im Verhältnis zu dem Kragen (20b) proximal der Seitenfläche (21) angeordnete Dichtscheibe (20a) des Dichtflansches (20) überträgt.

11. Verfahren nach Anspruch 10, bei welchem der Überbrückungsabschnitt als Hülse ausgebildet ist, die bereichsweise unterbrochen ist, womit der Kragen (20b) des Dichtflansches (20) für das Andrücken zum Befestigen des Dichtflansches (20) zugänglich ist.

12. Verfahren nach einem der vorstehenden Ansprüche, bei welchem die Füllsubstanz (4) auf Mörtel-Basis vorgesehen ist.

13. Verwendung einer Gebäudeeinführung (3), eines Dichtflansches (20)und einer Spanneinrichtung in einem Verfahren nach einem der vorstehenden Ansprüche.
